# EUROPEAN PATENT APPLICATION

(11) **EP 4 123 605 A2**
(43) Date of publication of application: **25.01.2023**
(21) Application number: 22211921.6
(22) Date of filing: 07.12.2022
(51) Int. Cl.: G06V 40/16

(54) **METHOD OF TRANSFERRING IMAGE, AND METHOD AND APPARATUS OF TRAINING IMAGE TRANSFER MODEL**

(30) Priority: 09.12.2021 CN 202111502659
(71) Applicant: Beijing Baidu Netcom Science Technology Co., Ltd., Beijing 100085 (CN)
(72) Inventor: Liang, Borong, Beijing 100085 (CN); Guo, Zhizhi, Beijing 100085 (CN); Hong, Zhibin, Beijing 100085 (CN)
(74) Representative: Hoffmann Eitle

(57) **Abstract**

The present disclosure provides a method of transferring an image, a method and an apparatus of training an image transfer model, a device, and a medium, which relate to a field of artificial intelligence, in particular to fields of deep learning and computer vision technologies, and may be applied to face image processing, face recognition, and other scenarios. The method of transferring the image includes: extracting a first attribute feature of a first object and a first shape feature of a target part of the first object respectively according to a first image and a first position information of the target part of the first object in the first image; extracting a first identity feature of a second object contained in a second image; and generating a first transferred image according to the first attribute feature, the first shape feature and the first identity feature, wherein the first transferred image contains the second object having the first attribute feature and the first shape feature.

## Description

### TECHNICAL FIELD

The present disclosure relates to a field of artificial intelligence, in particular to fields of deep learning and computer vision technologies, and may be applied to face image processing, face recognition, and other scenarios.

### BACKGROUND

With a development of deep learning and image processing technologies, an image transfer technology may be applied to various fields such as face recognition, video production and virtual reality.

In a related art, an image transfer may be performed using a three-dimensional reconstruction technology, which has complex steps and a large amount of computation.

### SUMMARY

A method of transferring an image, a method and an apparatus of training an image transfer model, an electronic device, and a storage medium are provided to reduce a computation amount and improve a transfer precision.

According to an aspect of the present disclosure, a method of transferring an image is provided, including: extracting a first attribute feature of a first object and a first shape feature of a target part of the first object respectively according to a first image and a first position information of the target part of the first object in the first image; extracting a first identity feature of a second object contained in a second image; and generating a first transferred image according to the first attribute feature, the first shape feature and the first identity feature, wherein the first transferred image contains the second object having the first attribute feature and the first shape feature.

According to another aspect of the present disclosure, a method of training an image transfer model is provided, the image transfer model includes a first encoding network, a second encoding network and a generation network; the method includes: extracting, by using the first encoding network, a second attribute feature of a third object and a second shape feature of a target part of the third object according to a third image and a fifth position information of the target part of the third object in the third image; extracting, by using the second encoding network, a second identity feature of the third object contained in a fourth image; generating, by using the generation network, a second transferred image according to the second attribute feature, the second shape feature and the second identity feature, wherein the second transferred image contains the third object having the second attribute feature and the second shape feature; and training the image transfer model according to a difference between the second transferred image and the third image.

According to another aspect of the present disclosure, an electronic device is provided, including: at least one processor; and a memory communicatively connected to the at least one processor, wherein the memory stores instructions executable by the at least one processor, and the instructions, when executed by the at least one processor, cause the at least one processor to implement the method of transferring the image and/or the method of training the image transfer model provided by the present disclosure.

According to another aspect of the present disclosure, a non-transitory computer-readable storage medium having computer instructions therein is provided, and the computer instructions are configured to cause a computer to implement the method of transferring the image and/or the method of training the image transfer model provided by the present disclosure.

According to another aspect of the present disclosure, a computer program product containing a computer program is provided, and the computer program, when executed by a processor, causes the processor to implement the method of transferring the image and/or the method of training the image transfer model provided by the present disclosure.

It should be understood that content described in this section is not intended to identify key or important features in embodiments of the present disclosure, nor is it intended to limit the scope of the present disclosure. Other features of the present disclosure will be easily understood through the following description.

### BRIEF DESCRIPTION OF THE DRAWINGS

The accompanying drawings are used for better understanding of the solution and do not constitute a limitation to the present disclosure, in which:
FIG. 1 shows a schematic diagram of an application scenario of a method and an apparatus of transferring an image and a method and an apparatus of training an image transfer model according to embodiments of the present disclosure;
FIG. 2 shows a flowchart of a method of transferring an image according to embodiments of the present disclosure;
FIG. 3 shows a schematic diagram of a principle of extracting an attribute feature and a shape feature according to embodiments of the present disclosure;
FIG. 4 shows a schematic diagram of a principle of obtaining a first image according to embodiments of the present disclosure;
FIG. 5 shows a schematic diagram of a principle of a method of transferring an image according to embodiments of the present disclosure;
FIG. 6 shows a flowchart of a method of training an image transfer model according to embodiments of the present disclosure;
FIG. 7 shows a schematic diagram of a principle of a method of training an image transfer model according to embodiments of the present disclosure;
FIG. 8 shows a structural block diagram of an apparatus of transferring an image according to embodiments of the present disclosure;
FIG. 9 shows a structural block diagram of an apparatus of training an image transfer model according to embodiments of the present disclosure; and
FIG. 10 shows a structural block diagram of an electronic device for implementing a method of transferring an image and/or a method of training an image transfer model according to embodiments of the present disclosure.

### DETAILED DESCRIPTION OF EMBODIMENTS

Exemplary embodiments of the present disclosure will be described below with reference to the accompanying drawings, which include various details of embodiments of the present disclosure to facilitate understanding and should be considered as merely exemplary. Therefore, those of ordinary skilled in the art should realize that various changes and modifications may be made to embodiments described herein without departing from the scope and spirit of the present disclosure. Likewise, for clarity and conciseness, descriptions of well-known functions and structures are omitted in the following description.

The present disclosure provides a method of transferring an image, including a feature extraction stage, an identity extraction stage, and an image generation stage. In the feature extraction stage, a first attribute feature of a first object and a first shape feature of a target part of the first object are extracted respectively according to a first image and a first position information of the target part of the first object in the first image. In the identity extraction stage, a first identity feature of a second object contained in a second image is extracted. In the image generation stage, a first transferred image is generated according to the first attribute feature, the first shape feature and the first identity feature, and the first transferred image contains the second object having the first attribute feature and the first shape feature.

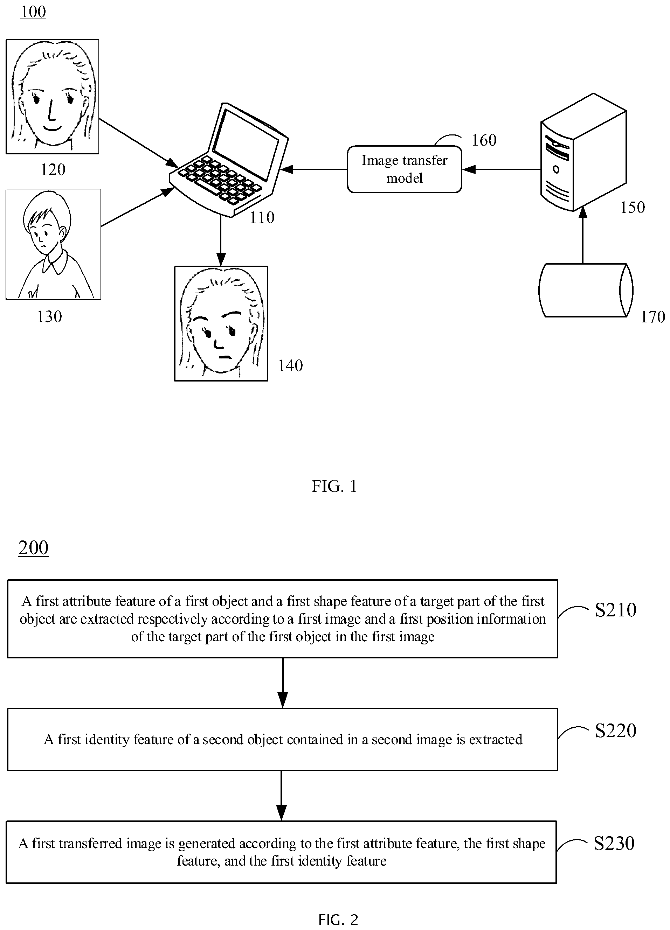

An application scenario of the method and apparatus provided in the present disclosure will be described below with reference to FIG. 1.

FIG. 1 shows a schematic diagram of an application scenario of a method and an apparatus of transferring an image and a method and an apparatus of training an image transfer model according to embodiments of the present disclosure.

As shown in FIG. 1, an application scenario 100 of such embodiments may include an electronic device 110, which may be any electronic device having a processing function, including but not limited to a smart phone, a tablet computer, a laptop computer, a desktop computer, a server, or the like.

The electronic device 110 may perform, for example, an emotion transfer on an input image 120 of a first face and an input image 130 of a second face, so as to generate an image 140. A face in the image 140 is the first face, but the first face has an emotion and a pose of the second face. For example, it is possible to extract an identity feature from the image 120 of the first face, and extract an attribute feature from the image 130 of the second face. After the identity feature and the attribute feature are fused, the image 140 may be generated through a generation network. The generation network may be, for example, a generation network Generator in Generative Adversarial Networks (GAN). The attribute feature may include, for example, an emotion feature, a pose features, or the like.

In an embodiment, the emotion and the pose of the second face may be transferred to the first face by using an image transfer model, so as to generate the image 140.

According to embodiments of the present disclosure, as shown in FIG. 1, the application scenario 100 may further include a server 150. The electronic device 110 may be communicatively connected to the server 150 through a network, and the network may include a wireless or wired communication link.

Exemplarily, the server 150 may be used to train the image transfer model, and transmit a trained image transfer model 160 to the electronic device 110 in response to a model acquisition request from the electronic device 110, so that the electronic device 110 may transfer an emotion and a pose of a face. In an embodiment, the electronic device 110 may further transmit the image 120 of the first face and the image 130 of the second face to the server 150 through the network, so that the server 150 may generate the image 140 according to the trained image transfer model.

According to embodiments of the present disclosure, as shown in FIG. 1, the application scenario 100 may further include a database 170, in which a large number of images or videos may be maintained. The server 150 may access the database 170 and extract some images containing a same face from the database 170 as sample images to train the image transfer model.

It should be noted that the method of transferring the image provided by the present disclosure may be performed by the electronic device 110 or the server 150. Accordingly, the apparatus of transferring the image provided by the present disclosure may be provided in the electronic device 110 or the server 150. The method of training the image transfer model provided in the present disclosure may be performed by the server 150. Accordingly, the apparatus of training the image transfer model provided by the present disclosure may be provided in the server 150.

It should be understood that a number and a type of electronic device, server and database in FIG. 1 are merely schematic. According to implementation needs, any number and type of terminal devices, servers and databases may be provided.

A method of transferring an image provided by the present disclosure will be described in detail below with reference to FIG. 2 to FIG. 5 in combination with FIG. 1.

FIG. 2 shows a flowchart of a method of transferring an image according to embodiments of the present disclosure.

As shown in FIG. 2, a method 200 of transferring an image of such embodiments may include operation S210 to operation S230.

In operation S210, a first attribute feature of a first object and a first shape feature of a target part of the first object are extracted respectively according to a first image and a first position information of the target part of the first object in the first image.

According to embodiments of the present disclosure, the first object may be, for example, a face, a building, or the like. The first image may be an image captured for the first object, an image obtained by processing a captured image, or a video frame containing the first object in a video. The first image may be captured in real time or in advance.

According to such embodiments, a key point detection may be performed on the first image firstly, so as to obtain a plurality of key points representing the first object. Then, key points representing a target part may be selected from the plurality of key points. Subsequently, a region enclosed by a connection of the key points representing the target part may be enlarged to a certain extent to obtain an enlarged region. A position of the enlarged region in the first image may be determined as the first position information of the target part.

According to such embodiments, a target detection may be performed on the first image firstly, so as to obtain a position information of a detection frame surrounding the target part of the first object in the first image, and the position information may be determined as the first position information. The position information of the detection frame may include a coordinate value of a center point of the detection frame in a coordinate system constructed based on the first image, and a height and a width of the detection frame.

According to embodiments of the present disclosure, the first attribute feature may be used to represent, for example, a pose, an emotion, a line of sight, a skin state and other features of the first object. In a case that the first object is a face, the target part may be, for example, a mouth. By extracting the shape feature of the mouth separately, a state of the first object may be expressed better, which is conducive to generating a more realistic transferred image. It may be understood that the target part may be a part of the first object whose shape changes most obviously with a change of the object state.

In an embodiment, the first attribute feature may be extracted from the first image by using a first encoding network. The first encoding network may be obtained through pre-training, for example. The first encoding network may be a lightweight network, such as a MobileNet series network, a ShuffleNet network or SqueezeNet. The MobileNet network is a lightweight deep neural network constructed using Deepwise Separable Convolution. For example, the first encoding network may include a convolution layer and a pooling layer.

In an embodiment, the first attribute feature may also be extracted by using an emotion recognition algorithm that combines a local binary pattern and a local sparse representation. It is also possible to use a proportional relationship of parts of the first object detected by a key point detection algorithm as the first attribute feature.

In an embodiment, the emotion feature and the pose feature of the first object may be extracted respectively, and the emotion feature and the pose feature may be concatenated as the first attribute feature. It is also possible to input the first image into the first encoding network, and the first encoding network may simultaneously extract emotion and pose features, so as to output the first attribute feature.

In an embodiment, the first shape feature may be extracted from the region surrounded by the first position information, by using an encoding network similar to the first encoding network. Alternatively, the first shape feature may be extracted by using a boundary feature method and a geometric parameter method. For example, a non-lightweight network such as Residual Network (ResNet), Feature Pyramid Network (FPN) or U-Net may be used as the encoding network for extracting the first shape feature, because a precision of a shape feature is generally required to be higher to facilitate a generation of a realistic transferred image. The encoding network for extracting the first shape feature may include a convolution layer and a pooling layer, and has a skip connection structure.

In operation S220, a first identity feature of a second object contained in a second image is extracted.

According to embodiments of the present disclosure, the second object contained in the second image may be an object of a same type as the above-mentioned first object. For example, the first object and the second object may both be faces, or the first object and the second object may both be buildings. The first object and the second object may be the same object or different objects, which is not limited in the present disclosure.

According to embodiments of the present disclosure, for example, the first identity feature may be extracted from the second image by using a second encoding network. The second encoding network may be, for example, Residual Network (ResNet), Feature Pyramid Network (FPN), or U-Net. The second encoding network may include a convolution layer and a pooling layer, and has a skip connection structure, so as to extract an identity feature that is more complex than the attribute feature.

In operation S230, a first transferred image is generated according to the first attribute feature, the first shape feature, and the first identity feature.

According to embodiments of the present disclosure, the first attribute feature, the first shape feature and the first identity feature may be concatenated and input into the generation network Generator, and the generation network Generator may generate the first transferred image according to a concatenated feature. The generated first transferred image contains the second object having the first attribute feature and the first shape feature.

According to embodiments of the present disclosure, the attribute feature of the object and the shape feature of the target part are extracted from the first image, the identity feature of the object is extracted from the second image, and the transferred image is generated according to the identity feature, the attribute feature and the shape feature. Compared with a related art, there is no need to perform a three-dimensional reconstruction of the object, and the computation amount and the complexity of the image transfer may be reduced to a certain extent. Furthermore, by extracting the shape feature of the target part separately, the extracted feature representing the state of the object may be enriched, which is conductive to improving the precision and fidelity of the transferred image obtained, and therefore improving a user experience.

According to embodiments of the present disclosure, when generating the first transferred image according to the first attribute feature, the first shape feature and the first identity feature, it is possible to perform a fusion other than concatenating on the first attribute feature, the first shape feature and the first identity feature, so as to obtain a fusion feature. Then the fusion feature may be input into the generation network, and the generation network may output the first transferred image. For example, the first attribute feature, the first shape feature and the first identity feature may be fused by an add operation, or the first attribute feature, the first shape feature and the first identity feature may be concatenated firstly and then a convolution operation is performed through the convolution layer to obtain a fusion feature. It may be understood that the above-mentioned methods of fusing the first attribute feature, the first shape feature and the first identity feature are merely used as examples to facilitate understanding of the present disclosure, which are not limited in the present disclosure. Through the fusion of features, the generation network may generate a more realistic transferred image.

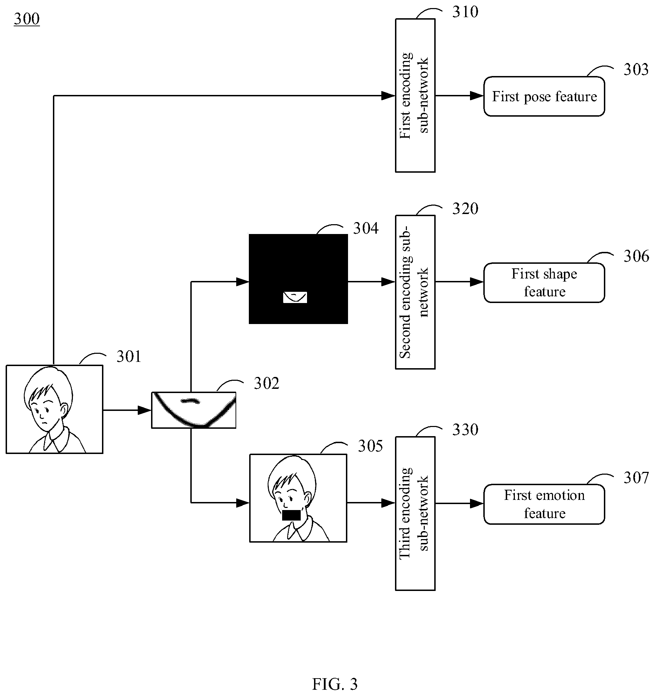

FIG. 3 shows a schematic diagram of a principle of extracting an attribute feature and a shape feature according to embodiments of the present disclosure.

According to embodiments of the present disclosure, the above-mentioned extracted first attribute feature may represent, for example, a pose feature and an emotion feature. In an embodiment, the pose feature and the emotion feature may also be extracted separately, so that the extracted features representing the state of the object may be more precise.

According to embodiments of the present disclosure, the emotion feature may be extracted from an image of a region other than the region where the target part is located, because the target part may generally affect a correct recognition of emotion to a certain extent. Through the method of such embodiments, the extraction precision of the emotion feature may be improved.

Specifically, as shown in FIG. 3, in an embodiment 300, taking the first object as a face and the target part as a mouth as an example, when extracting the first attribute feature and the first shape feature, it is possible to firstly determine an image of a target region for a target part in a first image 301 as a target image 302, according to a first position information of the target part in the first image 301. For example, a region enclosed by a detection frame surrounding the target part in the first image 301 may be determined according to the first position information. Then, the enclosed region may be enlarged to a predetermined size with a center point being kept unchanged, so as to obtain an enlarged detection frame. A region enclosed by the enlarged detection frame in the first image 301 may be determined as the target region.

At the same time when the target image is obtained, for example, the first pose feature may be extracted according to the first image. Specifically, the above-mentioned first encoding network may include three encoding sub-networks. According to such embodiments, a first pose feature 303 may be extracted from the first image 301 by using a first encoding sub-network 310 in the three encoding sub-networks. For example, the first pose feature may be obtained by inputting the first image 301 into the first encoding sub-network 310. The first encoding sub-network 310 may be, for example, the above-mentioned lightweight network.

When the target image 302 is obtained, a first shape feature may be extracted according to an image of the target region. At the same time, a first emotion feature may be extracted according to an image of a region other than the target region in the first image. Specifically, the first shape feature may be extracted according to the target image by using a second encoding sub-network in the three encoding sub-networks. The first emotion feature may be extracted according to the image of the region other than the target region in the first image. The second encoding sub-network may be the above-mentioned ResNet network or the like. A structure of a third encoding sub-network is similar to that of the first encoding sub-network, except that different sample data is used in training.

In an embodiment, when the target image 302 is obtained, the first image 301 may be processed using a mask for the target region, so as to obtain an image 304. In the image 304, each pixel in a region other than the target region has a pixel value of 0, while a pixel in the target region retains a pixel value in the first image 301. At the same time, the first image 301 may be processed using a mask for a region other than the target region, so as to obtain an image 305. In the image 305, each pixel in the target region has a pixel value of 0, while a pixel in the region other than the target region retains the pixel value in the first image 301. Then, the image 304 may be input into the second encoding sub-network 320, and the first shape feature 306 may be extracted by the second encoding sub-network 320. The image 305 may be input into the third encoding sub-network 330, and the first emotion feature 307 may be extracted by the third encoding sub-network 330.

By generating the image 305 and the image 304 and extracting features therefrom, it may be ensured that a size of an image input into each encoding sub-network is the same, so as to make a design of each encoding sub-network tend to be the same, and reduce a construction cost of the network.

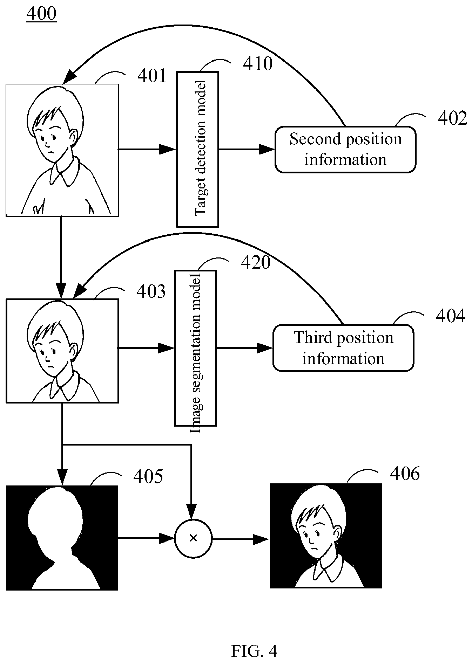

FIG. 4 shows a schematic diagram of a principle of obtaining a first image according to embodiments of the present disclosure.

According to embodiments of the present disclosure, the above-mentioned first image may be, for example, an image cropped according to a position of the first object, so as to avoid an interference of an object other than the first object in the image on the extraction of the first attribute feature, and reduce a computation amount for extracting the attribute feature.

For example, an image acquired in real time or in advance may be used as a template image for an object attribute. When the template image is obtained, in such embodiments, the template image containing the first object may be detected firstly to obtain a second position information of the first object in the template image. Then, the template image may be cropped according to the second position information, so as to obtain the first image.

For example, a target detection may be performed on the template image to obtain a position information of a detection frame surrounding the first object in the template image. The position information obtained by the detection may include, for example, a coordinate value of a center point of the detection frame in a coordinate system constructed based on the template image, and a height and a width of the detection frame. When the position information is obtained, the template image may be cropped according to a predetermined height and a predetermined width, with the center point of the detection frame as a center point. The predetermined height may be greater than the height of the detection frame, and the predetermined width may be greater than the width of the detection frame. For example, a size of the cropped image may be 256 pixels × 256 pixels. In such embodiments, the cropped image may be used as the first image.

In an embodiment, after the template image is cropped, for example, it is possible to further remove a background image of the image obtained by cropping, so as to reduce an interference of the background image on the extraction of the first attribute feature and the first shape feature, further improve the precision of the extracted first attribute feature and first shape feature, reduce the computation amount for extracting the attribute feature and the shape feature, and facilitate the generation of a more realistic transferred image.

As shown in FIG. 4, in an embodiment 400, when obtaining the first image, a target detection may be performed firstly on the acquired template image 401. For example, the template image 401 may be input into a target detection model 410, a second position information 402 may be obtained through the target detection model 410, then the template image 401 may be cropped according to the second position information, and an image 403 obtained by cropping may be used as an intermediate image. The target detection model may include, for example, any one selected from a Faster R-CNN model, a Single Shot Multibox Detector (SSD) model, a You Only Look Once (YOLO) detection model, or other models, which is not limited in the present disclosure.

When the intermediate image 403 is obtained, in such embodiments, a segmentation may be further performed on the intermediate image to obtain a third position information of the target object in the intermediate image. The target object includes the above-mentioned first object. For example, if the first object is a face, the target object may be a human body.

For example, as shown in FIG. 4, the intermediate image 403 may be input into an image segmentation model 420, and processed by the image segmentation model 420 to obtain a third position information 404. The third position information 404 may include a position of a boundary line of the target object in the intermediate image 403. The image segmentation model may include, for example, a Fully Convolutional Networks (FCN) model, a Deep Mask model, a Snake model, or a BodyPix model, which is not limited in the present disclosure.

When the third position information is obtained, a mask image 405 for the target object may be generated according to the third position information 404. Specifically, a pixel value in a region other than a region surrounded by the third position information 404 in the intermediate image 403 may be adjusted to 0, while a pixel value in the region surrounded by the third position information 404 may be set to 255, so as to obtain the mask image 405.

When the mask image 405 is obtained, a background image of the intermediate image 403 may be removed according to the mask image 405, so as to obtain the first image. Specifically, a pixel-level dot multiplication may be performed on the intermediate image 403 and the mask image 405, and a pixel value of each pixel in an image obtained by the dot multiplication may be divided by 255, so as to obtain a first image 406.

As shown in FIG. 4, the first image 406 obtained by the above processing only includes a foreground image, that is, an image of the target object, and a background of the target object is a black background, so that a removal of background may be achieved. In this way, an influence of background on the extraction of the attribute feature and the shape feature may be avoided.

According to embodiments of the present disclosure, when the first image is an image in which the background is removed, the aforementioned image input into the first encoding sub-network is the first image 406, and the aforementioned image input into the third encoding sub-network is an image in which a pixel in the background and a pixel in the target region both have pixel values of 0.

According to embodiments of the present disclosure, the aforementioned second image may be, for example, an image cropped according to the position of the second object, so as to avoid an interference of an object other than the second object in the image on the extraction of the first identity feature, and reduce the calculation amount of the identity feature extraction.

For example, an image acquired in real time or in advance may be used as a source image of an object identity. When the source image is obtained, in such embodiments, a source image containing the second object may be detected firstly to obtain a fourth position information of the second object in the source image. Then, the source image may be cropped according to the fourth position information to obtain a second image. It may be understood that a principle of cropping the source image to obtain the second image may be similar to a principle of cropping the template image to obtain the first image described above, and a size of the second image may also be, for example, 256 × 256, which will not be repeated here.

It should be noted that when obtaining the second image, for example, it is not needed to remove the background image, because the network for extracting the identity feature is generally complex, the identity feature may be learned accurately, and a learning process may be little affected by the background image. In this way, a pre-processing flow of the source image may be reduced.

According to embodiments of the present disclosure, when extracting the first identity feature, for example, identity features extracted from a plurality of images containing the second object may be integrated, so as to avoid a problem that an inaccurate identity feature is extracted due to an incomplete or unclear identity feature representation in a single image. In this way, the first identity feature with a higher precision may be obtained, and a more realistic transferred image may be obtained.

For example, a plurality of frames of video containing the second object may be extracted from a video, and a plurality of images included in the second image may be obtained according to the plurality of frames of video. For example, the above-mentioned cropping operation may be performed on each of the plurality of frames of video, so as to obtain a plurality of images with a size of 256 × 256 containing the second object. A number of the plurality of images may be, for example, any integer greater than 1, such as 3, 5, 8, etc., and the number may be set according to actual needs, which is not limited in the present disclosure.

According to such embodiments, the identity feature of the second object contained in each image of the plurality of images may be extracted respectively, so as to obtain a plurality of initial identity features. For example, for each of m images, it is possible to obtain an identity feature as an initial identity feature through the above-mentioned second encoding network, and thus obtain m initial identity features. Then, a mean feature of the plurality of initial identity features may be calculated, that is, the m initial identity features may be accumulated and divided by m, so as to obtain the mean feature. Finally, the mean feature of the plurality of initial identity features may be determined as the first identity feature of the second object.

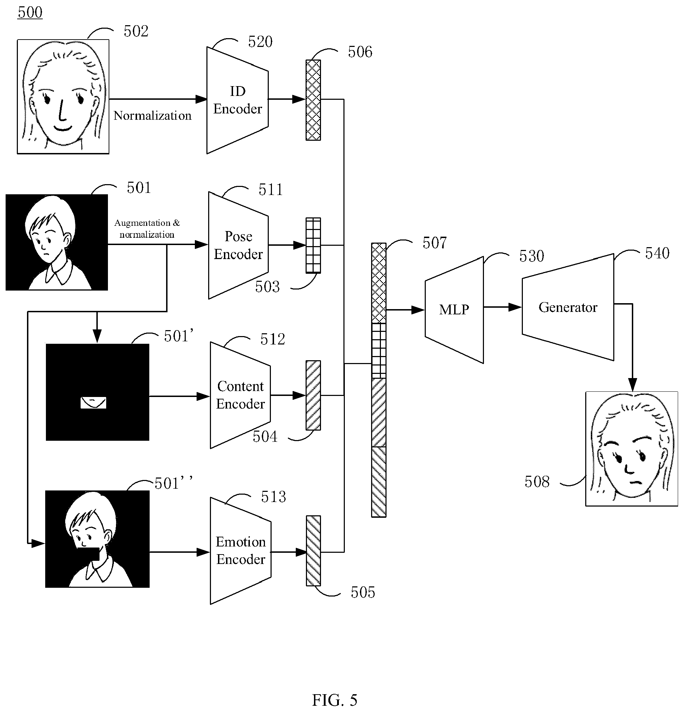

FIG. 5 shows a schematic diagram of a principle of a method of transferring an image according to embodiments of the present disclosure.

According to embodiments of the present disclosure, when extracting the first attribute feature and the first shape feature, for example, a data augmentation may be performed on the first image to obtain an augmented image. Then, the first attribute feature and the first shape feature may be extracted respectively according to the augmented image and the first position information. In this way, the identity feature of the first object in the first image may be weakened or even removed, so that the extraction precision of the first attribute feature and the first shape feature may be improved, the precision and fidelity of the transferred image may be improved, and therefore the user experience may be improved.

For example, the data augmentation may include, for example, a scaling processing, a translation processing and/or a pixel-level augmentation for an image. The pixel-level augmentation may include, for example, adjusting a contrast, a brightness, a blurring degree of a pixel, or performing a mosaic processing for a pixel. The mosaic processing may degrade a color scale detail of the pixel and cause a color block disorder.

According to such embodiments, a data augmentation tool may be provided. When the first image is input into the data augmentation tool, the data augmentation tool may perform a data augmentation on the first image by randomly using one or more of the above-mentioned data augmentation methods, and output the augmented image.

According to embodiments of the present disclosure, when extracting the attribute feature, for example, a normalization may be performed on the first image firstly, so as to reduce the computation amount for extracting the attribute feature and the shape feature, and improve an image transfer efficiency. After the normalization is performed, for example, a first normalized image may be obtained, and then the first attribute feature and the first shape feature may be extracted according to the first normalized image and the first position information.

For example, the normalization performed on the first image may include: dividing a pixel value of each pixel in the first image by 255, so that the obtained pixel value of each pixel is in a value interval [0, 1], and the first normalized image is obtained.

Similarly, when extracting the first identity feature, for example, a normalization may be performed on the second image, so as to reduce the computation amount for extracting the identity feature and improve the image transfer efficiency. After the normalization is performed, for example, a second normalized image may be obtained, and then the second normalized image may be encoded using the encoding network, so as to obtain the first identity feature. Specifically, the second normalized image may be input into the second encoding network and processed by the second encoding network, and then the first identity feature may be output. A method of performing a normalization on the second image may be similar to the method of performing a normalization on the first image described above, which will not be repeated here.

In an embodiment, when extracting the first attribute feature and the first shape feature, a data augmentation may be performed on the first image firstly, and then a normalization may be performed on the augmented image.

For example, as shown in FIG. 5, in a method of transferring an image in an embodiment 500, the above-mentioned image obtained by removing the background image of the intermediate image may be used as the first image. The first encoding network may include, for example, a pose encoding network (Pose Encoder) 511 (the above-mentioned first encoding sub-network), a content encoding network (Content Encoder) 512 (the above-mentioned second encoding sub-network), and an emotion encoding network (Emotion Encoder) 513 (the above-mentioned first encoding sub-network). The second encoding network may be, for example, an identity encoding network (ID Encoder) 520, which may be the above-mentioned ResNet network. The pose encoding network is used to extract the first pose feature, the content encoding network is used to extract the first shape feature, which may reflect a speech content to a certain extent, and the emotion encoding network is used to extract the first emotion feature.

In the embodiment 500, a pre-processing such as the above-mentioned data augmentation and normalization may be performed on the first image 501 firstly, and then the image obtained by the pre-processing may be input into the pose encoding network 511 and processed by the pose encoding network 511, and then a first pose feature 503 may be output. At the same time, the above-mentioned processing according to the target region may be performed based on the image obtained by the pre-processing, so as to obtain an image 501' and an image 501". Then, the image 501' is input into the content encoding network 512 and processed by the content encoding network 512, and then a first shape feature 504 may be output. The image 501" is input into the emotion encoding network 513 and processed by the emotion encoding network 513, and then a first emotion feature 505 may be output. At the same time, a pre-processing such as normalization may be performed on the second image 502. An image obtained by the pre-processing may be input into the identity encoding network 520 and processed by the identity encoding network 520, and then a first identity feature 506 may be output.

When the first identity feature 506, the first pose feature 503, the first shape feature 504 and the first emotion feature 505 are obtained, the four features may be concatenated through a concat() function, so as to obtain a concatenated feature 507. Then the concatenated feature 507 may be input into a multilayer perceptron (MLP) 530 to perform a fusion of the first identity feature 506, the first pose feature 503, the first shape feature 504 and the first emotion feature 505. Then an output of the multilayer perceptron 530 is input into a generation network Generator 440, and the Generator 540 may output a transferred image 508. An object in the transferred image 508 is the second object in the second image 502, but the second object has the emotion, the pose, and the mouth shape of the first object in the first image 501.

In an embodiment, the extracted first pose feature may be, for example, a 12-dimensional vector, the extracted first shape feature may be a 512-dimensional vector, the extracted first emotion feature may be a 256-dimensional vector, the extracted first identity feature may be a 512-dimensional vector, and then the concatenated feature 507 is a 1292-dimensional vector. The feature output by the multilayer perceptron 530 may also be, for example, a 1292-dimensional vector. A size of the generated transferred image 508 may be, for example, equal to the size of the first image and the size of the second image, for example, may be 256 × 256.

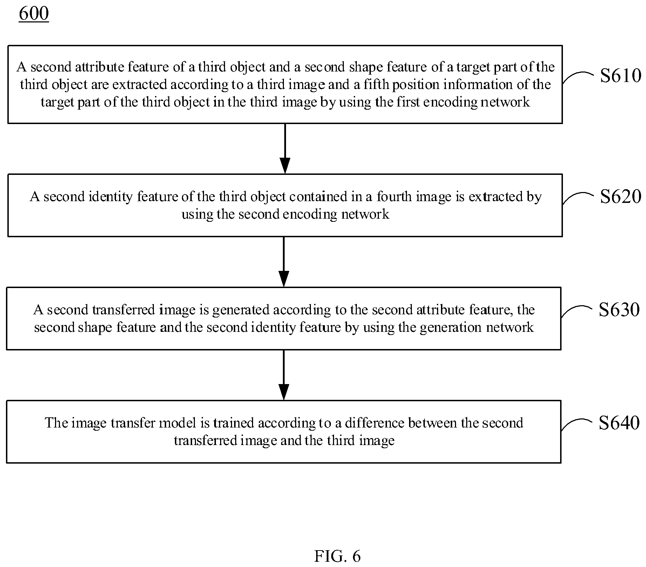

Based on the method of transferring the image provided by the present disclosure, the present disclosure further provides a method of training an image transfer model, which will be described in detail below with reference to FIG. 6 to FIG. 7.

FIG. 6 shows a flowchart of a method of training an image transfer model according to embodiments of the present disclosure.

According to embodiments of the present disclosure, as shown in FIG. 6, a method 600 of training an image transfer model in such embodiments may include operation S610 to operation S640. The image transfer model may include a first encoding network, a second encoding network, and a generation network.

In operation S610, a second attribute feature of a third object and a second shape feature of a target part of the third object are extracted according to a third image and a fifth position information of the target part of the third object in the third image by using the first encoding network. It may be understood that an implementation of operation S610 is similar to the implementation of obtaining the first attribute feature and the first shape feature described above, which will not be repeated here.

In operation S620, a second identity feature of the third object contained in a fourth image is extracted by using the second encoding network. The second encoding network is similar to the above-mentioned second encoding network, and an implementation of operation S620 is similar to the implementation of obtaining the first identity feature by using the second encoding network described above, which will not be repeated here. It should be noted that if both the third image and the fourth image contain a face, the face in the third image and the face in the fourth image are a face of a same person.

In operation S630, a second transferred image is generated according to the second attribute feature, the second shape feature and the second identity feature by using the generation network. The second transferred image contains the third object having the second attribute feature and the second shape feature. An implementation of operation S630 is similar to the implementation of obtaining the first transferred image described above, which will not be repeated here.

In operation S640, the image transfer model is trained according to a difference between the second transferred image and the third image.

According to embodiments of the present disclosure, when the third image is an image obtained by removing the background, since the second transferred image has a background, a background image in the third transferred image may be removed firstly by using a mask image for the third object obtained based on the third image. Then the image transfer model may be trained according to a difference between the second transferred image in which the background is removed and the third image.

For example, the difference between images may be obtained, for example, by comparing two images pixel by pixel. For example, the difference may be represented by an L1 loss, an L2 loss, or a smooth L1 loss between the second transferred image and the third image. Then, the image transfer model may be trained using a back propagation algorithm.

According to embodiments of the present disclosure, the second attribute feature may be, for example, similar to the first attribute feature, and may include a second pose feature and a second emotion feature. The first encoding network may include a first encoding sub-network, a second encoding sub-network, and a third encoding sub-network. The above-mentioned operation of extracting the second attribute feature and the second shape feature may include firstly determining an image of a target region for the target part in the third image according to the fifth position information, then extracting the second pose feature according to the third image by using the first encoding sub-network, extracting the second shape feature according to the image of the target region by using the second encoding sub-network, and extracting the second emotion feature according to an image of a region other than the target region in the third image by using the third encoding sub-network.

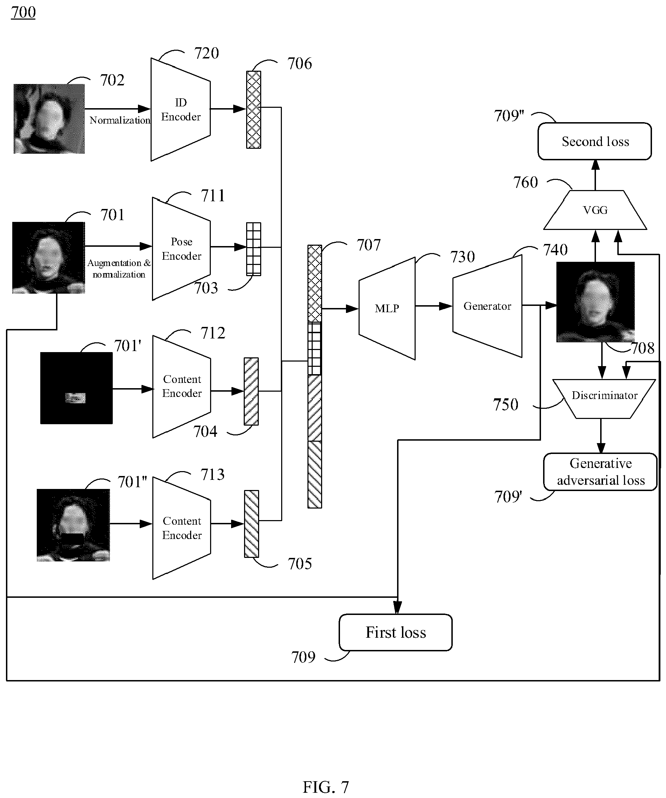

FIG. 7 shows a schematic diagram of a principle of a method of training an image transfer model according to embodiments of the present disclosure.

According to embodiments of the present disclosure, when training the image transfer model, for example, in addition to the aforementioned losses determined by pixel-by-pixel comparison, a loss of generating an image by the generation network may also be considered. Furthermore, a discrimination network may be provided corresponding to the generation network. Then, the generation network and the discrimination network form a generative adversarial network, and the generation network is trained by calculating a generative adversarial loss. In this way, a precision of the generation network in the trained image transfer model may be improved, and the generation network may generate a more realistic transferred image.

As shown in FIG. 7, in an embodiment 700, when training the image transfer model, similar to that described above, a data augmentation may be performed on a third image 701, then a normalization is performed, and the normalized image is input into a first encoding sub-network 711 to obtain a second pose feature 703. At the same time, an image 701' and an image 701" may be generated according to the augmented image or the normalized image. The image 701' may be processed through a second encoding sub-network 712 to obtain a second shape feature 704. The image 701" may be processed by a third encoding sub-network 713 to obtain a second emotion feature 705. At the same time, a normalization may be performed on a fourth image 702, and a normalized image may be input into a second encoding network 720 to obtain a second identity feature 706. Then, a concatenated feature 707 obtained by concatenating the second pose feature 703, the second shape feature 704, the second emotion feature 705 and the second identity feature 706 may be input to a multilayer perceptron 730, and an output of the multilayer perceptron 730 may be input into a generation network 740, so that a second transferred image 708 is output through the generation network 740. It should be noted that when the third image is an image in which the background is removed, the second transferred image 708 may be obtained by removing the background from the image output by the generation network 740.

Subsequently, a first loss 709 of the image transfer model may be determined according to a pixel-level difference between the second transferred image 708 and the third image 701. The first loss may be the above-mentioned L1 loss or the like. At the same time, the second transferred image 708 and the third image 701 may be input into a discrimination network 750 respectively, and the discrimination network 750 may output a first truth probability that the second transferred image is a true image and a second truth probability that the third image is a true image. A generative adversarial loss 709' may be determined according to the second transferred image, the third image, the first truth probability and the second truth probability.

When the first loss 709 and the generative adversarial loss 709' are determined, for example, the image transfer model may be trained firstly according to a loss of a generation network part in the first loss 709 and the generative adversarial loss 709'. Then the discrimination network may be trained according to a loss of a discrimination network part in the generative adversarial loss 709', so as to complete an iteration of training.

In an embodiment, as shown in FIG. 7, in addition to the aforementioned first loss 709 and generative adversarial loss 709', for example, a feature-level comparison may be performed between the third image 701 and the second transferred image 708, and a second loss 709" may be generated according to a comparison result.

For example, the third image 701 and the second transferred image 708 may be respectively input into a feature extraction network 760. The feature extraction network 760 may be, for example, a VGG network, a ResNet network, or the like, which is not limited in the present disclosure. When two features are extracted, the second loss 709" may be calculated according to a difference between the two features. In such embodiments, the second loss 709" may be calculated, for example, by using a perceptual loss function, or the above-mentioned L1 loss, L2 loss, or the like may be used.

When the first loss, the generative adversarial loss and the second loss are obtained, a weighted sum of the first loss, a loss of a generation network part in the generative adversarial loss, and the second loss may be calculated. The image transfer model may be trained according to the weighted sum. Then, the discrimination network may be trained according to a loss of a discrimination network part in the generative adversarial loss, so as to complete an iteration of training.

By performing a plurality of iterations of training, the loss of the image transfer model may reach a loss threshold, thus completing the training of the image transfer model. According to such embodiments, the image transfer model is trained by further taking into account the feature difference between the second transferred image and the third image, so that a precision of the trained image transfer model may be further improved. Accordingly, the trained image transfer model may generate a more realistic transferred image.

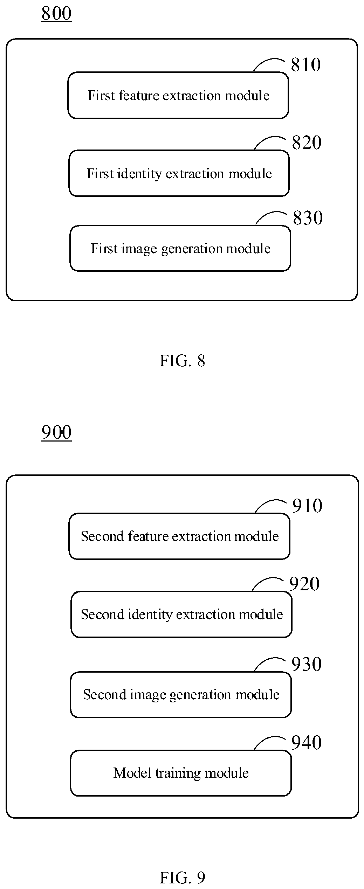

Based on the method of transferring the image provided by the present disclosure, the present disclosure further provides an apparatus of transferring an image, which will be described in detail below with reference to FIG. 8.

FIG. 8 shows a structural block diagram of an apparatus of transferring an image according to embodiments of the present disclosure.

As shown in FIG. 8, an apparatus 800 of transferring an image in such embodiments may include, for example, a first feature extraction module 810, a first identity extraction module 820, and a first image generation module 830.

The first feature extraction module 810 may be used to extract a first attribute feature of a first object and a first shape feature of a target part of the first object respectively according to a first image and a first position information of the target part of the first object in the first image. In an embodiment, the first feature extraction module 810 may be used to perform operation S210 described above, which will not be repeated here.

The first identity extraction module 820 may be used to extract a first identity feature of a second object contained in a second image. In an embodiment, the first identity extraction module 820 may be used to perform operation S220 described above, which will not be repeated here.

The first image generation module 830 may be used to generate a first transferred image according to the first attribute feature, the first shape feature and the first identity feature, and the first transferred image contains the second object having the first attribute feature and the first shape feature. In an embodiment, the first image generation module 830 may be used to perform operation S230 described above, which will not be repeated here.

According to embodiments of the present disclosure, the first attribute feature includes a first pose feature and a first emotion feature. The first feature extraction module 810 may include a first image determination sub-module, a first pose extraction sub-module, a first shape extraction sub-module, and a first emotion extraction sub-module. The first image determination sub-module may be used to determine an image of a target region for the target part in the first image according to the first position information. The first pose extraction sub-module may be used to extract the first pose feature according to the first image. The first shape extraction sub-module may be used to extract the first shape feature according to the image of the target region. The first emotion extraction sub-module may be used to extract the first emotion feature according to an image of a region other than the target region in the first image.

According to embodiments of the present disclosure, the apparatus 800 of transferring the image may further include a first image detection module and a first image cropping module. The first image detection module may be used to detect a template image containing the first object, so as to obtain a second position information of the first object in the template image. The first image cropping module may be used to crop the template image according to the second position information, so as to obtain the first image.

According to embodiments of the present disclosure, the image cropping module may include a cropping sub-module, a segmentation sub-module, a mask generation sub-module, and a background removal sub-module. The cropping sub-module may be used to crop the template image according to the second position information, so as to obtain an intermediate image. The segmentation sub-module may be used to perform an image segmentation on the intermediate image, so as to obtain a third position information of a target object in the intermediate image; the target object includes the first object. The mask generation sub-module may be used to generate a mask image for the target object according to the third position information. The background removal sub-module may be used to remove a background image in the intermediate image according to the mask image, so as to obtain the first image.

According to embodiments of the present disclosure, the first feature extraction module 810 may include an image augmentation sub-module and a feature extraction sub-module. The image augmentation sub-module may be used to perform a data augmentation on the first image, so as to obtain an augmented image. The feature extraction sub-module may be used to extract the first attribute feature and the first shape feature respectively according to the first position information and the augmented image.

According to embodiments of the present disclosure, the first feature extraction module 810 may include a first normalization sub-module and a feature extraction sub-module. The first normalization sub-module may be used to perform a normalization on the first image, so as to obtain a first normalized image. The feature extraction sub-module may be used to extract the first attribute feature and the first shape feature respectively according to the first position information and the first normalized image.

According to embodiments of the present disclosure, the apparatus 800 of transferring the image may further include a second image detection module and a second image cropping module. The second image detection module may be used to detect a source image containing the second object, so as to obtain a fourth position information of the second object in the source image. The second image cropping module may be used to crop the source image according to the fourth position information, so as to obtain the second image.

According to embodiments of the present disclosure, the first identity extraction module 820 may include a second normalization sub-module and an identity extraction sub-module. The second normalization sub-module may be used to perform a normalization on the second image, so as to obtain a second normalized image. The identity extraction sub-module may be used to encode the second normalized image by using an encoding network, so as to obtain the first identity feature of the second object.

According to embodiments of the present disclosure, the second image may include a plurality of images, and the first identity extraction module 820 may be used to: extract an identity feature of the second object contained in each of the plurality of images respectively, so as to obtain a plurality of initial identity features; and determine a mean feature of the plurality of initial identity features as the first identity feature of the second obj ect.

According to embodiments of the present disclosure, the first image generation module 830 may include a feature fusion sub-module and an image generation sub-module. The feature fusion sub-module may be used to fuse the first attribute feature, the first shape feature and the first identity feature to obtain a fusion feature. The image generation sub-module may be used to input the fusion feature into a generation network to obtain the first transferred image.

Based on the method of training the image transfer model provided by the present disclosure, the present disclosure further provides an apparatus of training an image transfer model, which will be described below with reference to FIG. 9.

FIG. 9 shows a structural block diagram of an apparatus of training an image transfer model according to embodiments of the present disclosure.

As shown in FIG. 9, an apparatus 900 of training an image transfer model in such embodiments may include a second feature extraction module 910, a second identity extraction module 920, a second image generation module 930, and a model training module 940. The image transfer model includes a first encoding network, a second encoding network and a generation network.

The second feature extraction module 910 may be used to extract, by using the first encoding network, a second attribute feature of a third object and a second shape feature of a target part of the third object according to a third image and a fifth position information of the target part of the third object in the third image. In an embodiment, the second feature extraction module 910 may be used to perform operation S610 described above, which will not be repeated here.

The second identity extraction module 920 may be used to extract, by using the second encoding network, a second identity feature of the third object contained in a fourth image. In an embodiment, the second identity extraction module 920 may be used to perform operation S620 described above, which will not be repeated here.

The second image generation module 930 may be used to generate, by using the generation network, a second transferred image according to the second attribute feature, the second shape feature and the second identity feature; the second transferred image contains the third object having the second attribute feature and the second shape feature. In an embodiment, the second image generation module 930 may be used to perform operation S630 described above, which will not be repeated here.

The model training module 940 may be used to train the image transfer model according to a difference between the second transferred image and the third image. In an embodiment, the model training module 940 may be used to perform operation S640 described above, which will not be repeated here.

According to embodiments of the present disclosure, the second attribute feature includes a second pose feature and a second emotion feature. The second feature extraction module 910 may include a second image determination sub-module, a second pose extraction sub-module, a second shape extraction sub-module, and a second emotion extraction sub-module. The second image determination sub-module may be used to determine an image of a target region for the target part in the third image according to the fifth position information. The second pose extraction sub-module may be used to extract the second pose feature according to the third image by using the first encoding sub-network. The second shape extraction sub-module may be used to extract the second shape feature according to the image of the target region by using the second encoding sub-network. The second emotion extraction sub-module may be used to extract the second emotion feature according to an image of a region other than the target region in the third image by using the third encoding sub-network.

According to embodiments of the present disclosure, the model training module 940 may include a first loss determination sub-module, a truth probability determination sub-module, a second loss determination sub-module, and a model training sub-module. The first loss determination sub-module may be used to determine a first loss of the image transfer model according to a pixel difference between the second transferred image and the third image. The truth probability determination sub-module may be used to input the second transferred image and the third image respectively into a discrimination network, so as to obtain a first truth probability for the second transferred image and a second truth probability for the third image. The second loss determination sub-module may be used to determine a generative adversarial loss of the image transfer model according to the second transferred image, the third image, the first truth probability and the second truth probability. The model training sub-module may be used to train the image transfer model according to the first loss and the generative adversarial loss.

According to embodiments of the present disclosure, the model training module 940 may further include a third loss determination sub-module used to determine a second loss of the image transfer model according to a difference between a feature extracted by a feature extraction network from the second transferred image and a feature extracted by the feature extraction network from the third image. The model training sub-module is specifically used to train the image transfer model according to the first loss, the generative adversarial loss and the second loss.

It should be noted that in the technical solution of the present disclosure, an acquisition, a collection, a storage, a use, a processing, a transmission, a provision and a disclosure of user personal information involved comply with provisions of relevant laws and regulations, and do not violate public order and good custom.

According to embodiments of the present disclosure, the present disclosure further provides an electronic device, a readable storage medium, and a computer program product.

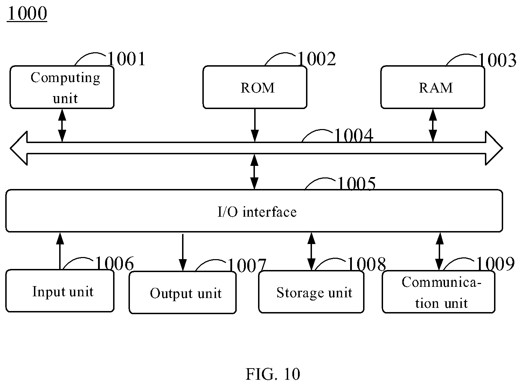

FIG. 10 shows a schematic block diagram of an example electronic device 1000 for implementing the method of transferring the image and/or the method of training the image transfer model according to embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 10, the electronic device 1000 includes a computing unit 1001 which may perform various appropriate actions and processes according to a computer program stored in a read only memory (ROM) 1002 or a computer program loaded from a storage unit 1008 into a random access memory (RAM) 1003. In the RAM 1003, various programs and data necessary for an operation of the electronic device 1000 may also be stored. The computing unit 1001, the ROM 1002 and the RAM 1003 are connected to each other through a bus 1004. An input/output (I/O) interface 1005 is also connected to the bus 1004.

A plurality of components in the electronic device 1000 are connected to the I/O interface 1005, including: an input unit 1006, such as a keyboard, or a mouse; an output unit 1007, such as displays or speakers of various types; a storage unit 1008, such as a disk, or an optical disc; and a communication unit 1009, such as a network card, a modem, or a wireless communication transceiver. The communication unit 1009 allows the electronic device 1000 to exchange information/data with other devices through a computer network such as Internet and/or various telecommunication networks.

The computing unit 1001 may be various general-purpose and/or dedicated processing assemblies having processing and computing capabilities. Some examples of the computing units 1001 include, but are not limited to, a central processing unit (CPU), a graphics processing unit (GPU), various dedicated artificial intelligence (AI) computing chips, various computing units that run machine learning model algorithms, a digital signal processing processor (DSP), and any suitable processor, controller, microcontroller, etc. The computing unit 1001 executes various methods and steps described above, such as the method of transferring the image and/or the method of training the image transfer model. For example, in some embodiments, the method of transferring the image and/or the method of training the image transfer model may be implemented as a computer software program which is tangibly embodied in a machine-readable medium, such as the storage unit 1008. In some embodiments, the computer program may be partially or entirely loaded and/or installed in the electronic device 1000 via the ROM 1002 and/or the communication unit 1009. The computer program, when loaded in the RAM 1003 and executed by the computing unit 1001, may execute one or more steps in the method of transferring the image and/or the method of training the image transfer model described above. Alternatively, in other embodiments, the computing unit 1001 may be configured to perform the method of transferring the image and/or the method of training the image transfer model by any other suitable means (e.g., by means of firmware).

Various embodiments of the systems and technologies described herein may be implemented in a digital electronic circuit system, an integrated circuit system, a field programmable gate array (FPGA), an application specific integrated circuit (ASIC), an application specific standard product (ASSP), a system on chip (SOC), a complex programmable logic device (CPLD), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from a storage system, at least one input device and at least one output device, and may transmit the data and instructions to the storage system, the at least one input device, and the at least one output device.

Program codes for implementing the methods of the present disclosure may be written in one programming language or any combination of more programming languages. These program codes may be provided to a processor or controller of a general-purpose computer, a dedicated computer or other programmable data processing apparatus, such that the program codes, when executed by the processor or controller, cause the functions/operations specified in the flowcharts and/or block diagrams to be implemented. The program codes may be executed entirely on a machine, partially on a machine, partially on a machine and partially on a remote machine as a stand-alone software package or entirely on a remote machine or server.

In the context of the present disclosure, a machine-readable medium may be a tangible medium that may contain or store a program for use by or in connection with an instruction execution system, an apparatus or a device. The machine-readable medium may be a machine-readable signal medium or a machine-readable storage medium. The machine-readable medium may include, but is not limited to, an electronic, magnetic, optical, electromagnetic, infrared, or semiconductor system, apparatus or device, or any suitable combination of the above. More specific examples of the machine-readable storage medium may include an electrical connection based on one or more wires, a portable computer disk, a hard disk, a random access memory (RAM), a read only memory (ROM), an erasable programmable read only memory (EPROM or a flash memory), an optical fiber, a compact disk read only memory (CD-ROM), an optical storage device, a magnetic storage device, or any suitable combination of the above.

In order to provide interaction with the user, the systems and technologies described here may be implemented on a computer including a display device (for example, a CRT (cathode ray tube) or LCD (liquid crystal display) monitor) for displaying information to the user, and a keyboard and a pointing device (for example, a mouse or a trackball) through which the user may provide the input to the computer. Other types of devices may also be used to provide interaction with the user. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local region network (LAN), a wide region network (WAN), and the Internet.

The computer system may include a client and a server. The client and the server are generally far away from each other and usually interact through a communication network. The relationship between the client and the server is generated through computer programs running on the corresponding computers and having a client-server relationship with each other. The server may be a cloud server, also known as a cloud computing server or a cloud host, which is a host product in a cloud computing service system to solve shortcomings of difficult management and weak service scalability existing in an existing physical host and VPS (Virtual Private Server) service. The server may also be a server of a distributed system or a server combined with a block-chain.

It should be understood that steps of the processes illustrated above may be reordered, added or deleted in various manners. For example, the steps described in the present disclosure may be performed in parallel, sequentially, or in a different order, as long as a desired result of the technical solution of the present disclosure may be achieved. This is not limited in the present disclosure.

The above-mentioned specific embodiments do not constitute a limitation on the scope of protection of the present disclosure. Those skilled in the art should understand that various modifications, combinations, sub-combinations and substitutions may be made according to design requirements and other factors. Any modifications, equivalent replacements and improvements made within the spirit and principles of the present disclosure shall be contained in the scope of protection of the present disclosure.

## Claims

1. A method (200) of transferring an image, comprising:
extracting (S210) a first attribute feature of a first object and a first shape feature of a target part of the first object respectively according to a first image and a first position information of the target part of the first object in the first image;
extracting (S220) a first identity feature of a second object contained in a second image; and
generating (S230) a first transferred image according to the first attribute feature, the first shape feature and the first identity feature, wherein the first transferred image contains the second object having the first attribute feature and the first shape feature.

2. The method according to claim 1, wherein the first attribute feature comprises a first pose feature and a first emotion feature; the extracting a first attribute feature of a first object and a first shape feature of a target part of the first object respectively according to a first image and a first position information of the target part of the first object in the first image comprises:
determining an image of a target region for the target part in the first image according to the first position information;
extracting the first pose feature according to the first image;
extracting the first shape feature according to the image of the target region; and
extracting the first emotion feature according to an image of a region other than the target region in the first image.

3. The method according to claim 1, further comprising:
detecting a template image containing the first object, so as to obtain a second position information of the first object in the template image;
cropping the template image according to the second position information, so as to obtain an intermediate image;
performing an image segmentation on the intermediate image, so as to obtain a third position information of a target object in the intermediate image, wherein the target object comprises the first object;
generating a mask image for the target object according to the third position information; and
removing a background image in the intermediate image according to the mask image, so as to obtain the first image.

4. The method according to claim 1 or 2, wherein the extracting a first attribute feature of a first object and a first shape feature of a target part of the first object respectively according to a first image and a first position information of the target part of the first object in the first image comprises:
performing a data augmentation on the first image, so as to obtain an augmented image; and
extracting the first attribute feature and the first shape feature respectively according to the first position information and the augmented image.

5. The method according to claim 1 or 2, wherein the extracting a first attribute feature of a first object and a first shape feature of a target part of the first object respectively according to a first image and a first position information of the target part of the first object in the first image comprises:
performing a normalization on the first image, so as to obtain a first normalized image; and
extracting the first attribute feature and the first shape feature respectively according to the first position information and the first normalized image.

6. The method according to claim 1, wherein the extracting a first identity feature of a second object contained in a second image comprises:
performing a normalization on the second image, so as to obtain a second normalized image; and
encoding the second normalized image by using an encoding network, so as to obtain the first identity feature of the second object.

7. The method according to claim 1 or 6, wherein the second image comprises a plurality of images; the extracting a first identity feature of a second object contained in a second image comprises:
extracting an identity feature of the second object contained in each of the plurality of images respectively, so as to obtain a plurality of initial identity features; and
determining a mean feature of the plurality of initial identity features as the first identity feature of the second object.

8. The method according to claim 1, wherein the generating a first transferred image according to the first attribute feature, the first shape feature and the first identity feature comprises:
fusing the first attribute feature, the first shape feature and the first identity feature to obtain a fusion feature; and
inputting the fusion feature into a generation network to obtain the first transferred image.

9. A method (600) of training an image transfer model, wherein the image transfer model comprises a first encoding network, a second encoding network and a generation network; the method comprises:
extracting (S610), by using the first encoding network, a second attribute feature of a third object and a second shape feature of a target part of the third object according to a third image and a fifth position information of the target part of the third object in the third image;
extracting (S620), by using the second encoding network, a second identity feature of the third object contained in a fourth image;
generating (S630), by using the generation network, a second transferred image according to the second attribute feature, the second shape feature and the second identity feature, wherein the second transferred image contains the third object having the second attribute feature and the second shape feature; and
training (S640) the image transfer model according to a difference between the second transferred image and the third image.

10. The method according to claim 9, wherein the second attribute feature comprises a second pose feature and a second emotion feature; the first encoding network comprises a first encoding sub-network, a second encoding sub-network, and a third encoding sub-network; the extracting, by using the first encoding network, a second attribute feature of a third object and a second shape feature of a target part of the third object according to a third image and a fifth position information of the target part of the third object in the third image comprises:
determining an image of a target region for the target part in the third image according to the fifth position information;
extracting the second pose feature according to the third image by using the first encoding sub-network;
extracting the second shape feature according to the image of the target region by using the second encoding sub-network; and
extracting the second emotion feature according to an image of a region other than the target region in the third image by using the third encoding sub-network.

11. The method according to claim 9, wherein the training the image transfer model according to a difference between the second transferred image and the third image comprises:
determining a first loss of the image transfer model according to a pixel difference between the second transferred image and the third image;
inputting the second transferred image and the third image respectively into a discrimination network, so as to obtain a first truth probability for the second transferred image and a second truth probability for the third image;
determining a generative adversarial loss of the image transfer model according to the second transferred image, the third image, the first truth probability and the second truth probability; and
training the image transfer model according to the first loss and the generative adversarial loss.

12. The method according to claim 11, wherein the training the image transfer model according to a difference between the second transferred image and the third image further comprises:
determining a second loss of the image transfer model according to a difference between a feature extracted by a feature extraction network from the second transferred image and a feature extracted by the feature extraction network from the third image; and
training the image transfer model according to the first loss, the generative adversarial loss and the second loss.

13. An electronic device (1000), comprising:
at least one processor (1001); and
a memory (1002,1003) communicatively connected to the at least one processor, wherein the memory stores instructions executable by the at least one processor, and the instructions, when executed by the at least one processor, cause the at least one processor to implement the method according to any one of claims 1 to 12.

14. A non-transitory computer-readable storage medium having computer instructions therein, wherein the computer instructions are configured to cause a computer to implement the method according to any one of claims 1 to 12.

15. A computer program product containing a computer program, wherein the computer program, when executed by a processor, causes the processor to implement the method according to any one of claims 1 to 12.
